# EUROPÄISCHE PATENTSCHRIFT

(11) **EP 0 827 848 B1**
(45) Veröffentlichungstag und Bekanntmachung des Hinweises auf die Patenterteilung: **08.11.2000**
(21) Anmeldenummer: 97112988.7
(22) Anmeldetag: 29.07.1997
(51) Int. Cl.: B60G 11/20, B60G 11/64, B62D 21/18

(54) **Fahrwerk für Kraftfahrzeuge oder Anhänger**
Chassis for motor vehicles or trailers
Chassis pour véhicule à moteur ou remorques

(30) Priorität: 05.09.1996 DE 29615448 U
(43) Veröffentlichungstag der Anmeldung: 11.03.1998
(73) Patentinhaber: AL-KO KOBER AG, D-89359 Kötz (DE)
(72) Erfinder: Lehner, Helmut, 89359 Kötz (DE); Wöhrle, Rudolf, 89335 Rieden (DE)
(74) Vertreter: Ernicke, Hans-Dieter, Dipl.-Ing.

(56) Entgegenhaltungen:
- EP-A- 0 196 147
- DE-A- 2 330 566
- DE-A- 2 405 456
- DE-A- 2 930 036
- DE-C- 720 049
- DE-C- 4 003 520
- DE-U- 1 769 685
- FR-A- 2 548 974
- GB-A- 890 876

## Beschreibung

Die Erfindung bezieht sich auf ein Fahrwerk für Kraftfahrzeuge oder Anhänger mit den Merkmalen im Oberbegriff des Hauptanspruchs.

Ein solches Fahrwerk ist aus der FR-A-2 548 974 bekannt. Es kann gegen ein ursprünglich vorhandenes Fahrwerk mit einer Blattfederachse ausgetauscht werden. Das Fahrwerk besteht aus einem von Längsholmen und Quertraversen gebildeten Fahrwerkrahmen mit einem sich quer erstreckenden Trägerrohr, an dem über Federn gelagerte Radschwinghebel befestigt sind. Der Fahrwerkrahmen hat hochstehende Flansche zur Verbindung mit dem Fahrzeugaufbau und kann hierüber an den für die ursprüngliche Blattfederachse vorgesehenen Befestigungsstellen montiert werden. Mit dem ausgetauschten Fahrwerk kann das Fahrverhalten des Fahrzeugs verbessert werden. Darüber hinaus hat das Austauschaggregat keine weiteren Funktionen.

Die einzelnen Fahrwerkskomponenten mit Drehstabfederung, Luftfederung und dergleichen sind aus der DE-U-70 10 933, der DE-C 720 049, der DE-U-17 69 685 und der EP-A-0 196 147 bekannt. Die letztgenannte Druckschrift zeigt außerdem ein Kombifahrwerk, das wahlweise mit einer Blattfederachse oder mit einer Achse mit MacPherson-Federbeinen ausgestattet sein kann und welches dementsprechend vorbereitete unterschiedliche Befestigungsstellen aufweist.

Der Erfindung liegt die Aufgabe zugrunde, das austauschbare Fahrwerk weiter zu verbessern und seinen Nutzen zu erweitern.

Die Erfindung löst diese Aufgabe mit den Merkmalen im Hauptanspruch.
Das Fahrwerk kann vergrößert werden, indem die Längsholme eine über die normale Länge nach rückwärts sich erstreckende Verlängerung aufweisen, mit der eine Quertraverse verbunden ist, die eine Anhängerkupplung aufweisen kann. Auf diese Weise wird sichergestellt, daß das Fahrzeug, in welche das Fahrwerk eingebaut wird, nicht nur ein verbessertes Fahrverhalten, sondern auch eine größere Ladekapazität erhält.

An das Fahrwerk kann rückseitig ein kompletter Anbaurahmen angeschlossen werden. Dieser Anbaurahmen verlängert nicht nur die Ladefläche, sondern ist außerdem hinsichtlich der Ausbildung seiner Oberkante an die unterschiedliche Form des Fahrzeuges, in welches das Fahrwerk eingesetzt wird, anpassungsfähig. Weist das Fahrzeug einen Flachboden auf, dann ist die Höhe des Anbaurahmens verhältnismäßig gering, weil dessen Oberkante fluchtend zum Flachboden des Fahrzeuges ausgerichtet wird. Weist das Fahrzeug hingegen einen Leiterrahmen auf, dessen Niveau normalerweise höher als das des Flachbodens liegt, dann braucht der Anbaurahmen nur dementsprechend erhöht werden, um dessen Oberkante fluchtend zum Leiterrahmen auszubilden.

Solche Anbaurahmen weisen zweckmäßigerweise daran gelagerte und höhenverstellbare Stützfüße auf, wie sie bei Wohnwagen oder landwirtschaftlichen Anhängern bekannt sind. Es ist aber auch möglich, im Fahrwerkrahmen oder im Anbaurahmen ein Reserverad zu führen, dessen Käfig zweckmäßigerweise nach den Merkmalen des Anspruches 12 gestaltet werden kann.

Im einfachen Fall wird das Fahrwerk anstelle einer Starrachse, die über Blattfedern abgestützt wird, eingesetzt. Wenn das Fahrzeug motorisch angetrieben wird, ist für den Austausch eine angetriebene Vorderachse erforderlich. Es ist aber ebenso gut möglich, das erfindungsgemäße Fahrwerk bei Anhängern einzusetzen, die mit Starrachsen oder ungenügender Federung ausgerüstet sind.

Ferner ist die Möglichkeit gegeben, die Radschwinghebel mit einer externen Federabstützung, z.B. einer Luftfeder, zu verbinden. Zu diesem Zweck braucht der einzelne Radschwinghebel lediglich mit einem Ansatz versehen zu werden, an dem sich das eine Ende der Luftfeder abstützt. Das andere Ende der Luftfeder stützt sich an einer Abstützplatte ab, die mit den Längsholmen des Fahrwerkes verbunden ist. Damit für diese externe Federabstützung genügend Freiraum geschaffen wird, empfiehlt es sich ferner, die Längsholme im Bereiche des Trägerrohres und der externen Federabstützung in Richtung zur Längsmittelachse des Fahrwerkes abzuknicken, so daß der einzelne Längsholm in der Draufsicht einen trapezförmigen Verlauf einnimmt.

In diesem Fall der externen Federabstützung wird durch das Trägerrohr ein Drehstabstabilisator geführt, der mit den beiden Radschwinghebeln verbunden ist. Eine solche Maßnahme ist an sich bekannt.

Diese und weitere Merkmale der Erfindung ergeben sich aus der Zeichnung. In ihr ist die Erfindung schematisch und beispielsweise dargestellt. Es zeigen:
- Figuren 1 und 2 :: Seitenansicht und Draufsicht auf ein Fahrwerk als Austauschaggregat für Achsen von serienmäßigen Fahrzeugen, das nicht zur Erfindung gehört.
- Figuren 3 und 4 :: Seitenansicht und Draufsicht auf ein erstes Ausführungsbeispiel des Fahrwerkes mit einer Verlängerung,
- Figuren 5 und 6 :: Seitenansicht und Draufsicht auf ein zweites Ausführungsbeispiel des Fahrwerkes mit einem daran angeschlossenen Anbaurahmen.

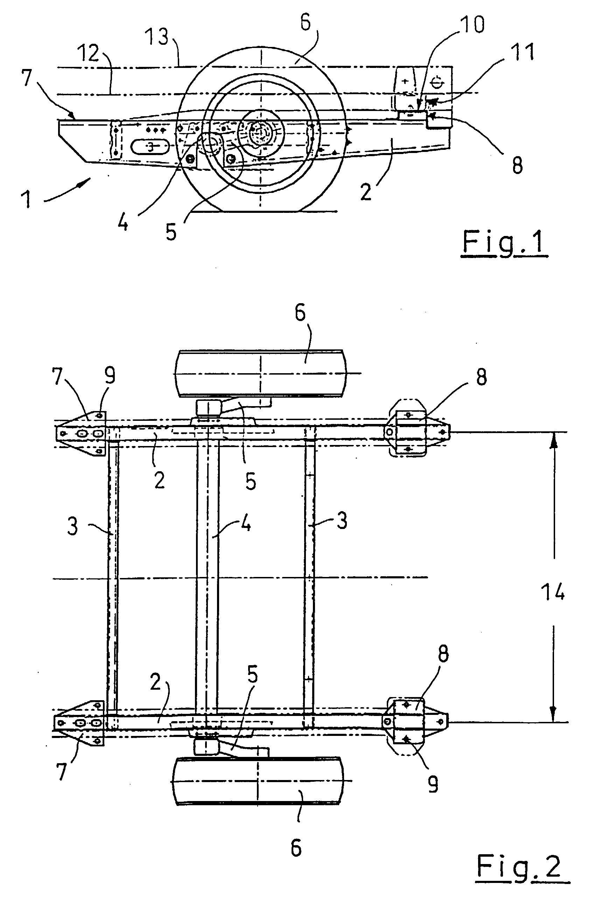

Ein Fahrwerk besteht bei den Figuren 1 und 2 aus einem Fahrwerkrahmen (1), der zwei Längsholme (2) und Quertraversen (3) aufweist, die miteinander verschweißt sind. Zwischen den Quertraversen (3) befindet sich ein Trägerrohr (4), das in üblicher Weise mit Flanschschilden mit den Längsholmen (2) verschraubt ist. Dieses Trägerrohr (4) erstreckt sich quer zur Längsachse des Fahrzeuges und ist dazu bestimmt, Radschwinghebel (5) drehbar zu lagern und federnd abzustützen. An den Radschwinghebeln (5) sind die Räder (6) drehbar gelagert.

Die Federabstützung kann verschiedener Art sein. Im allgemeinen empfiehlt es sich, im Trägerrohr (4) Drehstabfedern anzuordnen, die im Mittelbereich des Trägerrohrs (4) drehschlüssig abgestützt und am freien Ende mit den Radschwinghebeln (5) verbunden sind. Anstelle dieser Drehstabfedern können auch durchgehende Abstützungen, beispielsweise in Form von Gummisträngen, vorgesehen sein.

Die Längsholme (2) weisen im vorderen und rückwärtigen Bereich Flanschkonstruktionen (7,8) auf, die in üblicher Weise mit Bohrungen (9) versehen sind.

Die Flanschkonstruktionen (7,8) sind hinsichtlich der Lage ihrer Bohrungen (9) exakt auf die Befestigungsstellen ausgerichtet, mit denen die anderen vorhandenen Achsen und deren Federungen an Fahrzeugen befestigt sind. Durch diese deckungsgleiche Anordnung der Bohrungen des Fahrwerkes (1) mit den Bohrungen der ursprünglich am Fahrzeug vorhandenen Achsbefestigungen ist die Möglichkeit gegeben, das Fahrwerk (1) auf einfachste Weise gegen das ursprünglich vorhandene Fahrwerk auszutauschen und damit dem Fahrzeug ein wesentlich verändertes Fahrverhalten, insbesondere verbessertes Wankverhalten zu vermitteln.

Wenn das Fahrzeug, in welches das Fahrwerk (1) austauschhalber eingesetzt wird, mit einer Blattfederkonstruktion abgestützt ist, dann wird der Abstand (14) der Längsholme (2) des erfindungsgemäßen Fahrwerkes genau an den Abstand der ursprünglich vorhandenen Blattfedern angepaßt. Auf diese Weise wird die Voraussetzung dafür geschaffen, daß die Bohrungen (9) der Flanschkonstruktionen (7,8) genau zu den Bohrungen der ursprünglichen Blattfederbefestigung fluchtend passen.

Häufig sind die Befestigungsstellen der Blattfedern in unterschiedlicher Höhe zueinander angeordnet. Diesem Niveauunterschied dadurch Rechnung getragen, daß beispielsweise die hinteren Flanschkonstruktionen (8) eine erhabene Flanschplatte (10) aufweisen, deren Höhe dem Niveauunterschied angepaßt ist. Dadurch erhalten die hinteren Flanschkonstruktionen (8) einen in der Seitenansicht stufenförmigen oder trapezförmigen Aufbau.

Die Figur 1 zeigt die Lagezuordnung des Fahrwerkes (1) zum Fahrzeugaufbau (11) des Fahrzeuges, dessen ursprüngliche Achse ausgetauscht werden soll. Wenn dieses Fahrzeug einen Flachboden (12) aufweist, dann wird der Rahmen des Fahrzeugaufbaus (11) bzw. des Flachbodens (12) unmittelbar auf die Flanschkonstruktionen (7,8) aufgesetzt. Weist hingegen das Fahrzeug einen Leiterrahmen (13) auf, dann wird der unter dem Leiterrahmen (13) befindliche Rahmen (11) mit den Flanschkonstruktionen (7,8) verbunden.

Aus der Figur 2 erkennt man deutlich, warum das Fahrwerk (1) ein besseres Wankverhalten als das ursprüngliche Fahrzeug aufweist. Während Blattfederachsen das Wankverhalten vom Abstand der Blattfedern abhängig ist, welcher gemäß Figur 2 dem Abstand (14) der Längsholme (2) entspricht, ist beim Fahrwerk (1) das Wankverhalten vom Abstand der Radschwinghebel (5) abhängig. Dieser Abstand ist nicht unbeträchtlich größer als der Abstand (14) der Längsholme (2).

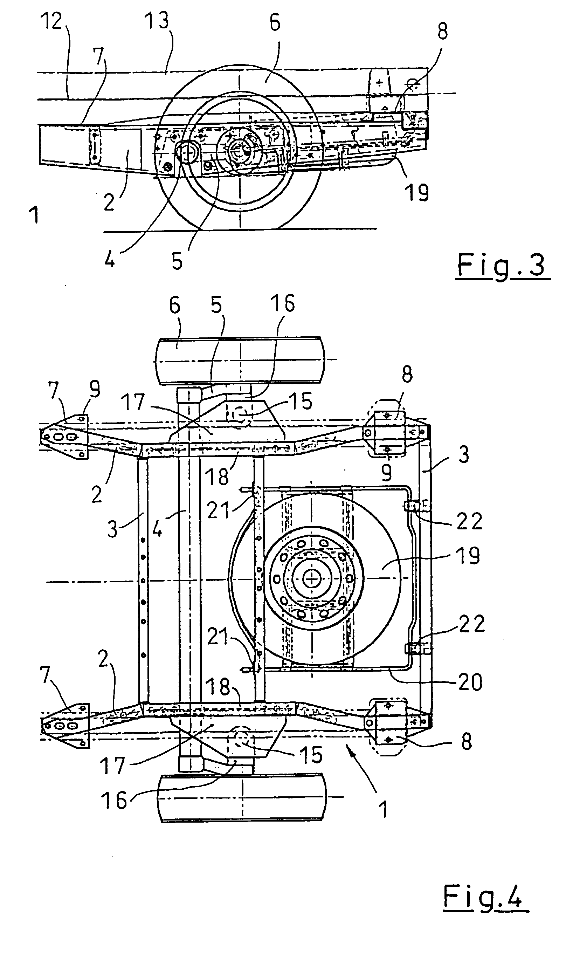

Im ersten Ausführungsbeispiel der Figuren 3 und 4 ist eine Möglichkeit gezeigt, wie man durch eine externe Federabstützung, beispielsweise durch Luftfedern (15), das Fahrverhalten des Fahrwerkes (1) für besonders schonenden Transport verbessern kann. Zu diesem Zweck weist der einzelne Radschwinghebel (5) einen Ansatz (16) auf, der das eine Ende der Luftfeder (15) abstützt. Das andere Ende der Luftfeder (15) ist an einer Abstützplatte (17) abgestützt, welche außenseitig an den Längsholmen (2) befestigt ist. Um die Spurbreite des Fahrzeuges nicht zu verändern weisen die Längsholme (2) einen nach innen abgeknickten Bereich (18) auf, wodurch ausreichend Platz für die Luftfedern (15) geschaffen wird.

Solche Fahrwerke mit externen Federabstützungen, insbesondere Luftfedern (15) eignen sich besonders für die Verwendung der serienmäßigen Fahrzeuge als Krankenwagen oder Transportfahrzeug für Gefahrgut, Elektronikbauteile, Computer oder dergleichen, die eine stoßfreie Bewegung mit möglichst geringem Wankverhalten voraussetzen. Es braucht demnach für diese speziellen Anwendungsfälle keine Sonderanfertigung von Fahrzeugen vorgesehen zu werden, weil man ein serienmäßiges Fahrzeug für normale Transporte durch Austausch der Fahrwerke im Fahrverhalten entsprechend einstellen kann.

Die Figuren 3 und 4 zeigen die Möglichkeit, im Fahrwerk zwischen den Längsholmen (2) ein Reserverad (19) in liegender Weise platzsparend unterzubringen. Hierzu wird ein Käfig (20) verwendet, der im vorderen Bereich Schwenklager (21) und im rückwärtigen Bereich lösbare Gesperre (22) aufweist. Dieser Käfig (20) ist nach oben offen. Um das Reserverad (19) entnehmen zu können, wird der Käfig durch Lösen des Gesperres (22) nach unten verschwenkt, so daß dann das Reserverad (19) seitlich, aus dem Käfig (20) herausgezogen werden kann.

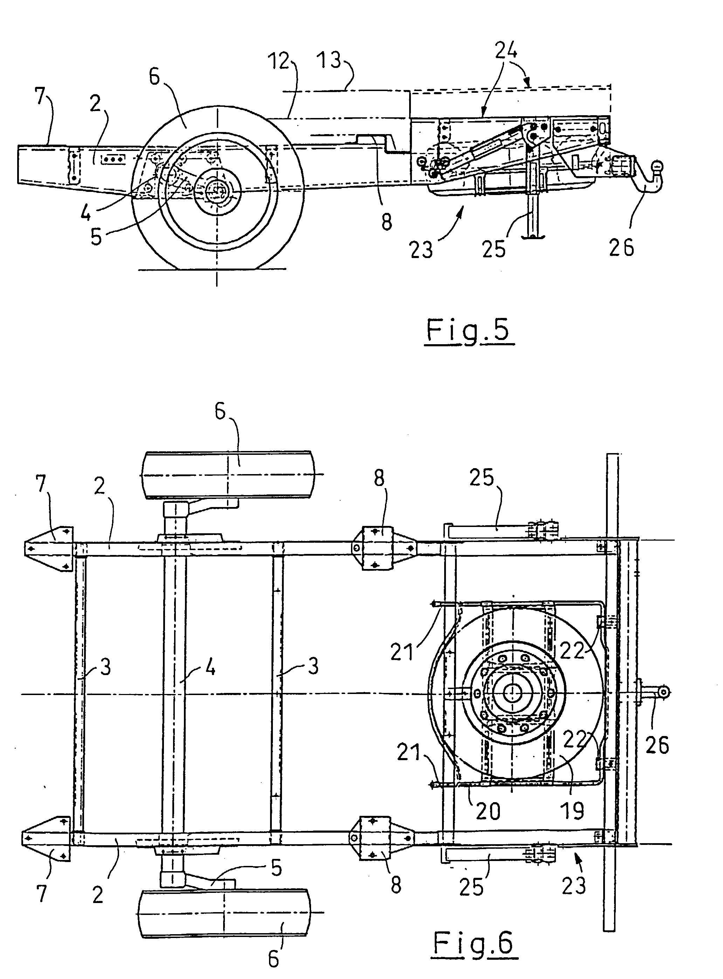

Die Erfindung bietet die Möglichkeit, den Fahrwerkrahmen (1) nach hinten zu verlängern, um die Ladekapazität des Fahrzeuges zu erhöhen. Im einfachsten Fall werden hierbei die Längsholme (2) nach hinten verlängert. Diese sind rückseitig durch eine Quertraverse (3) miteinander verbunden, welche zugleich die lösbaren Gesperre (22) trägt. An diese Quertraverse (3) kann außerdem eine Anhängerkupplung (26) angeschlossen sein, wie sie in den Figuren 5 und 6 dargestellt ist.

Diese Figuren 5 und 6 zeigen außerdem als zweites Ausführungsbeispiel die Verlängerung des Fahrwerkes (1) durch Hinzufügung eines Anbaurahmens (23). Dieser Anbaurahmen (23) wird mit den aufrechten Schenkeln der Längsholme (2) schraubtechnisch verbunden. Hierbei empfiehlt es sich, im Bereiche der Verbindungsstellen ineinandergreifende napfförmige Profilierungen üblicher Art vorzusehen, um die Verschraubung zu stabilisieren.

Je nachdem, ob der Anbaurahmen (23) einen Flachboden (12) oder einen Leiterrahmen (13) des Fahrzeuges verlängern soll, wird die Oberkante (24) des Anbaurahmens (23) entsprechend dimensioniert.

Der Anbaurahmen (23) weist seitlich angeordnete und drehbar gelagerte Stützfüße (25) auf, die außerdem höhenverstellbar ausgebildet sind. Dadurch kann die vom Anbaurahmen (23) aufzunehmende Last im Stillstand des Fahrzeuges gegenüber dem Boden abgestützt werden. Mit der rückwärtigen Quertraverse (3) ist außerdem eine Anhängerkupplung (26) verbunden. Im übrigen kann im Anbaurahmen (23) ein Reserverad (19) in der gleichen Weise angeordnet werden, wie dies in Figur 4 in Bezug auf die Anordnung des Reserverades (19) im Fahrwerkrahmen (1) gezeigt ist.

## Patentansprüche

1. Fahrwerk für Kraftfahrzeuge oder Anhänger, bestehend aus einem von Längsholmen (2) und Quertraversen (3) gebildeten Fahrwerkrahmen (1), an dem mindestens ein sich quer erstreckendes Trägerrohr (4) mit daran gelagerten, von Federn abgestützten Radschwinghebeln (5) befestigt ist, wobei der Fahrwerkrahmen (1) mit Flanschkonstruktionen (7,8) zum Verbinden mit dem Fahrzeugaufbau (11) versehen ist, wobei das Fahrwerk als Austauschaggregat gegen eine vorhandene andere Achse eines vorderradangetriebenen Kraftfahrzeuges oder eines Anhängers ausgebildet ist, wobei die Bohrungen (9) der Flanschkonstruktionen (7,8) deckungsgleich zu den zur Befestigung der anderen Achse und ihrer Federung benötigten Bohrungen beziehungsweise Schraubenlöchern angeordnet sind, dadurch **gekennzeichnet,** daß die Längsholme (2) eine hinter den hinteren Flanschkonstruktionen (8) entweder nach rückwärts sich erstreckende Verlängerung mit einer Quertraverse (3) aufweisen oder rückseitig mit einem Anbaurahmen (23) verbunden sind.

2. Fahrwerk nach Anspruch 1, dadurch **gekennzeichnet**, daß an der Quertraverse (3) oder am Anbaurahmen (23) eine Anhängerkupplung (26) angeordnet ist.

3. Fahrwerk nach Anspruch 1 oder 2, dadurch **gekennzeichnet,** daß der Anbaurahmen (23) die Ladefläche des Fahrzeuges verlängert und eine an den Flachboden (12) oder Leiterrahmen (13) des Fahrzeugaufbaus (11) angepaßte Oberkante (24) besitzt.

4. Fahrwerk nach Anspruch 1, 2 oder 3, dadurch **gekennzeichnet**, daß der Anbaurahmen (23) mit abschwenkbar gelagerten und höhenverstellbaren Stützfüßen (25) versehen ist.

5. Fahrwerk nach einem der Ansprüche 1 bis 4, dadurch **gekennzeichnet**, daß im Fahrwerkrahmen (1) oder im Anbaurahmen (23) ein liegend angeordnetes Reserverad (19) geführt ist.

6. Fahrwerk nach Anspruch 5, dadurch **gekennzeichnet**, daß ein das Reserverad (19) haltender Käfig (20) im Bereich des vorderen Randes am Fahrwerk- oder Anbaurahmen (1,23) schwenkbar (21) gelagert und im rückwärtigen Bereich des Fahrwerk- oder Anbaurahmens (1,23) mit mindestens einem lösbaren Gesperre (22) versehen ist.

7. Fahrwerk nach einem der Ansprüche 1 bis 6, dadurch **gekennzeichnet**, daß die Radschwinghebel (5) über Drehstabfedern an oder in dem Trägerrohr (4) abgestützt sind.

8. Fahrwerk nach einem der Ansprüche 1 bis 7, dadurch **gekennzeichnet**, daß die Radschwinghebel (5) mit einem das Trägerrohr (4) durchsetzenden Drehstab-Stabilisator sowie mit einer externen Federabstützung (15), vorzugsweise einer Luftfeder, verbunden sind.

9. Fahrwerk nach Anspruch 8, dadurch **gekennzeichnet**, daß die externe Federabstützung (15) zwischen einem Ansatz (16) des Radschwinghebels (5) und einer mit dem Längsholm (2) verbundenen Abstützplatte (17) angeordnet ist.

10. Fahrwerk nach Anspruch 8 oder 9, dadurch **gekennzeichnet**, daß ein Längsholm (2) im Bereich des Trägerrohres (4) und der externen Federabstützung (15) einen in Richtung zur Längsmittelachse des Fahrzeuges abgeknickten Bereich (18) aufweist.

## Claims

1. Chassis for motor vehicles or trailers, comprising a chassis frame (1) which is formed by longitudinal members (2) and crossmembers (3) and on which at least one transversely extending support tube (4) with oscillating wheel levers (5) mounted thereon and supported by springs is fixed, the chassis frame (1) being provided with flange structures (7,8) for connection to the vehicle body (11), the chassis being designed as a replacement unit for another, existing, axle of a front-wheel-drive motor vehicle or of a trailer, the bores (9) of the flange structures (7,8) being arranged so as to be congruent with the bores or screw holes required to secure the other axle and its suspension, characterized in that, behind the rear flange structures (8), the longitudinal members (2) either have an extension which extends rearwards and has a crossmember (3) or are connected at the rear to an add-on frame (23).

2. Chassis according to Claim 1, characterized in that a trailer coupling (26) is arranged on the crossmember (3) or on the add-on frame (23).

3. Chassis according to Claim 1 or 2, characterized in that the add-on frame (23) extends the loading surface of the vehicle and has an upper edge (24) matched to the flat floor (12) or ladder frame (13) of the vehicle body (11).

4. Chassis according to Claim 1, 2 or 3, characterized in that the add-on frame (23) is provided with supporting feet (25) which are vertically adjustable and are mounted in such a way that they can be swung down.

5. Chassis according to one of Claims 1 to 4, characterized in that a horizontally arranged spare wheel (19) is carried in the chassis frame (1) or in the add-on frame (23).

6. Chassis according to Claim 5, characterized in that a cage (20) which holds the spare wheel (19) is mounted pivotably (21) on the chassis or add-on frame (1,23) in the region of the front edge and is provided in the rear region of the chassis or add-on frame (1,23) with at least one releasable locking mechanism (22).

7. Chassis according to one of Claims 1 to 6, characterized in that the oscillating wheel levers (5) are supported on or in the support tube (4) via torsion bar springs.

8. Chassis according to one of Claims 1 to 7, characterized in that the oscillating wheel levers (5) are connected to an anti-roll torsion bar which passes through the support tube (4) and to an external spring support (15), preferably a pneumatic spring.

9. Chassis according to Claim 8, characterized in that the external spring support (15) is arranged between a lug (16) of the oscillating wheel lever (5) and a supporting plate (17) connected to the longitudinal member (2).

10. Chassis according to Claim 8 or 9, characterized in that, in the region of the support tube (4) and of the external spring support (15), a longitudinal member (2) has a region (18) which is bent in the direction of the longitudinal centre line of the vehicle.

## Revendications

1. Châssis pour véhicules à moteur ou remorques, constitué d'un cadre (1) de châssis formé de longerons (2) et de traverses (3), auquel est fixé au moins un tube (4) porteur s'étendant transversalement, sur lequel sont montés des leviers (5) oscillants de roues soutenus par des ressorts, le cadre (1) de châssis étant pourvu de structures (7, 8) de bridage pour l'assemblage à la carrosserie (11) du véhicule, le châssis étant conçu comme ensemble de remplacement d'un autre essieu existant d'un véhicule à moteur à traction avant ou d'une remorque, les perçages (9) des structures (7, 8) de bridage étant disposés en coïncidence avec les perçages ou trous de vis nécessaires pour la fixation de l'autre essieu et de sa suspension, **caractérisé** en ce que les longerons (2), en arrière des structures (8) arrière de bridage, comportent un prolongement s'étendant vers l'arrière et pourvu d'une traverse (3), ou sont assemblés sur le côté arrière à un cadre (23) rapporté.

2. Châssis suivant la revendication 1, **caractérisé** en ce qu'un attelage (26) de remorque est disposé sur la traverse (3) ou sur le cadre (23) rapporté.

3. Châssis suivant la revendication 1 ou 2, **caractérisé** en ce que le cadre (23) rapporté augmente la surface de chargement du véhicule et possède un bord (24) supérieur adapté au fond (12) plat ou au cadre (13) en forme d'échelle de la carrosserie (11 ) du véhicule.

4. Châssis suivant la revendication 1, 2 ou 3, **caractérisé** en ce que le cadre (23) rapporté est pourvu de béquilles (25) pivotantes et réglables en hauteur.

5. Châssis suivant l'une des revendications 1 à 4, **caractérisé** en ce qu'une roue (19) de secours disposée à plat est guidée dans le cadre (1 ) de châssis ou dans le cadre (23) rapporté.

6. Châssis suivant la revendication 5, **caractérisé** en ce qu'une cage (20) maintenant la roue (19) de secours est montée à pivotement (21) dans la région du bord avant sur le cadre (1) de châssis ou le cadre (23) rapporté et est pourvue, dans la région arrière du cadre (1) de châssis ou du cadre (23) rapporté, d'au moins un moyen (22) de verrouillage libérable.

7. Châssis suivant l'une des revendications 1 à 6, **caractérisé** en ce que les leviers (5) oscillants de roues sont soutenus sur ou dans le tube (4) porteur au moyen de ressorts à barre de torsion.

8. Châssis suivant l'une des revendications 1 à 7, **caractérisé** en ce que les leviers (5) oscillants de roues sont reliés à un stabilisateur à barre de torsion traversant le tube (4) porteur, ainsi qu'à un soutien (15) externe à ressort, de préférence un ressort pneumatique.

9. Châssis suivant la revendication 8, **caractérisé** en ce que le soutien (15) externe à ressort est disposé entre un appendice (16) du levier (5) oscillant de roue et une plaque (17) de soutien assemblée au longeron (2).

10. Châssis suivant la revendication 8 ou 9, **caractérisé** en ce qu'un longeron (2) comporte, dans la région du tube (4) porteur et du soutien (15) externe à ressort, une partie (18) coudée en direction de l'axe médian longitudinal du véhicule.
